(19) Europäisches Patentamt

European Patent Office

Office européen des brevets

(11) Publication number: **0 332 390 B1**

## EUROPEAN PATENT SPECIFICATION

(45) Date of publication of patent specification: **10.05.95**  (51) Int. Cl.6: **B01D 53/04**

(21) Application number: **89302249.1**

(22) Date of filing: **07.03.89**

(54) Heaterless adsorption system for combined purification and fractionation of air.

(30) Priority: **07.03.88 US 164816**

(43) Date of publication of application:
**13.09.89 Bulletin 89/37**

(45) Publication of the grant of the patent:
**10.05.95 Bulletin 95/19**

(84) Designated Contracting States:
**DE FR IT**

(56) References cited:
**DE-A- 2 221 379**
**FR-A- 1 601 126**

(73) Proprietor: **PALL CORPORATION**
**30 Sea Cliff Avenue**
**Glen Cove**
**New York 11542 (US)**

(72) Inventor: **White, Donald H.**
**923 Alfred Lane**
**Homer**
**New York 13077 (US)**

(74) Representative: **Knott, Stephen Gilbert et al**
**MATHISEN, MACARA & CO.**
**The Coach House**
**6-8 Swakeleys Road**
**Ickenham**
**Uxbridge**
**Middlesex UB10 8BZ (GB)**

**Description**

BACKGROUND OF THE INVENTION

Field of the Invention

This invention relates to a regenerative adsorption method and, more particularly to a heaterless pressure-swing adsorption process for the combined and sequential purification and fractionation of air in a single multi-zone column.

Description of the Prior Art

Two types of known heaterless adsorption systems for producing a product gas from a mixed gas feed are the pressure-swing adsorption system and the purgesweep adsorption system. The two systems differ primarily in the method by which their adsorbent beds are regenerated.

Pressure-swing adsorption, or PSA, is described in Skarstrom U.S. Patent No. 2,944,627 and has become known as the Skarstrom cycle. The Skarstrom cycle operates between an elevated adsorption pressure and a lower desorption pressure and is an essentially isothermal process that uses the heat generated on adsorption at the elevated pressure to do the work of desorption at the reduced pressure, ambient or vacuum. In pressure-swing adsorption, a purge serves to transport the heat of adsorption into the contaminated region of the adsorbent bed and to adsorb from the bed the contaminant vapors released by evaporation. The purge is not cooled in the process so the quantity of purge required to adsorb the liberated contaminant vapors is minimized. Thus, in pressure-swing adsorption the difference in adsorbate loading is that obtained between the two different pressures at isothermal conditions. Short cycles and low throughput per cycle ensure conservation of heat. Full regeneration is ensured by maintaining the volume of purge gas at least equal to the volume of feed gas at their different pressures.

In a purge-sweep system the heat of adsorption is not conserved. On regeneration, the heat required to desorb is supplied by the purge, which lowers the purge gas temperature, and thus decreases the capacity of the purge to sweep away contaminants. To compensate for the diminished capacity of the purge to desorb the adsorbent, the purge flow rate is increased. Regeneration of the adsorbent in a purge-sweep system therefore requires significantly more purge gas than does regeneration in a PSA system.

Heaterless pressure-swing systems are used for a wide variety of gas separations, either to purify gases or to enrich them in selected components. Such separations include, for example, the dehydration of air, the removal of contaminants, such as carbon monoxide, carbon dioxide and the like, from air, and the enrichment of argon in air, nitrogen in air, and oxygen in air.

In the fractionation of air to produce oxygen and nitrogen, water and carbon dioxide are regarded as impurity components of the air feed and are thus advantageously removed from air prior to fractionation or enrichment. It is particularly desirable to fractionate dehydrated air due to the well known improvement in oxygen recovery based on the fractionation of dehydrated air as opposed to humid air. For example, use of dehydrated air can result in as high as 30% more oxygen recovery. It may also be desirable to remove various other contaminants often found in the air feed.

Various methods have been employed to pretreat compressed air feed prior to oxygen, or nitrogen, enrichment. For example, heaterless adsorbers such as those operating on the Skarstrom cycle, have been used to remove moisture and other contaminants from the air feed. The pretreated air may then be fractionated, for example, in another heaterless adsorber column which itself operates on the Skarstrom cycle with adsorbents capable of carrying out the desired separation. However, such pretreatment of the air feed is not completely satisfactory because it typically adds significant cost and complexity to the overall air enrichment system and reduces the overall efficiency of the fractionation/enrichment process due to the purge and energy consumption in the pretreatment process.

Another example of an air feedstock pretreatment process to remove moisture and other contaminants prior to fractionation is the use of a reversing heat exchanger in combination with a heaterless adsorption system, as described in U.S. Patent No. 4,380,457. The air separation process there disclosed includes passing an air supply under pressure through a reversing heat exchanger to cool the air and deposit water in the form of ice to form cool dried air; contacting the cool dried air with an adsorbent bed to remove at least carbon dioxide to form a residue of cool carbon dioxide free air; further cooling the cool carbon dioxide free air; and rectifying or fractionating the further cooled air.

More recently, it has been attempted to combine both air feed drying and air fractionation into a single column. However, a pretreatment step to remove the bulk of the moisture from the air feed was disclosed as necessary. Thus, U.K. Patent Application 2,171,927A is directed to a gas separation process utilizing pressure-swing adsorption which includes two adsorbent beds, each bed having a first desiccant layer capable of removing residual water vapor from the air feed subsequent to treatment of the compressed air in a heat exchanger to remove the bulk of the moisture and a second adsorbent layer capable of fractionating the air feed. The process thus includes as an essential step the pretreatment of the compressed air feed upon exit from the compressor and upstream of the adsorbent beds. In the compressed air feed pretreatment, the air is cooled in a heat exchanger to remove most of the water vapor from the air.

FR-A-1 601 126 discloses drying and fractionning of air in a single column having three adsorbent zones. Two adsorbent zones may be used when the water content is very low.

Despite the efforts of the prior art, there still remains a need to provide a simplified heaterless pressure-swing adsorption column having two adsorbent zones which is capable of sequentially purifying a compressed air feed and fractionating the purified air solely within the column and which does not require pretreatment of the air feed to remove a significant portion of the moisture.

Accordingly, it is the principal object of this invention to provide a method using a simplified heaterless pressure-swing adsorption system which combines both purification and fractionation of a compressed air feed into a single column having two adsorbent zones without the need for prior separate treatment of the air feed to remove moisture.

Another object of the present invention is to provide a method for selectively producing either oxygen or nitrogen in a pressure-swing adsorption apparatus which has at least one column having two adsorbent zones, and which is capable of sequentially purifying the air feed and fractionating the purified air solely within the column, without the necessity of removing water vapor from the air feed prior to its entering the adsorption column.

Another specific object of the invention is to reduce operating costs in a heaterless pressure-swing adsorption system for the purification and fractionation of air by reducing the energy required to operate a pressure-swing adsorption system, and to reduce the capital cost of equipment for such a system.

These and other objects and advantages of the present invention will be apparent from the detailed description of the invention. While the invention will be discussed in connection with the purification and fractionation of air to produce oxygen, it is not intended to be so limited. On the contrary, and solely by way of illustration, the invention may also be used to effectively and efficiently purify and fractionate air to produce nitrogen.

The present invention is predicated on the discovery that by properly sizing both the adsorbent zone for the purification of air, i.e., the removal of water from air, and the adsorbent zone for the fractionation of air into the selected components, both the purification zone and the fractionation zone may be combined into a single adsorbent column to provide a multi-zone heaterless adsorption column which is capable of sequentially purifying an air feed and fractionating the purified air solely within the column, without the need for separate upstream purification of the air feed.

The present invention thus provides a process for the sequential purification and fractionation of air in a single column and in the absence of pretreating the air feed to remove a contaminant comprising passing an air feed through an absorber column to produce product effluent, said column having at least two adsorption zones, said column having a first zone comprising an air feed purification adsorber for purifying said feed and having a first adsorbent therein for adsorbing said contaminant from said feed to effect purification, said first adsorbent being capable of being regenerated, and a second zone comprising an air fractionation adsorber for adsorbing at least one component of air and having a second adsorbent therein to effect fractionation of air, said second adsorbent being capable of being regenerated, characterized by said first zone being sized in accordance with the adsorption time, the flow rate, temperature and pressure of said feed such that the heat of adsorption released during the adsorption of said contaminant from the air feed is retained in said column so that said first zone operates as a pressure swing adsorber said second zone being sized in accordance with the the adsorption time, the flow rate, temperature and pressure of said feed so as to carry out the fractionation unaffected by the heat front generated by the heat of adsorption released in the first zone and to prevent breakthrough of the mass transfer front during fractionation so that said second zone acts as a purge sweep adsorber, and removing the product effluent from said column.

## DETAILED DESCRIPTION OF THE DRAWINGS

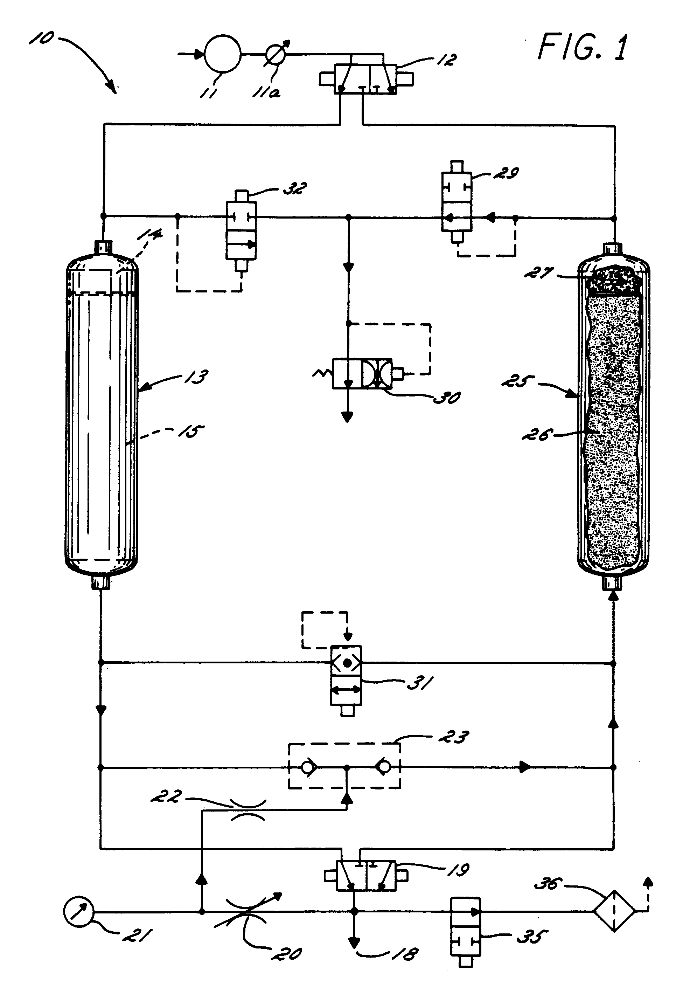

Fig. 1 is a schematic diagram of a two-column pressure-swing adsorption apparatus which incorporates the multi-zone column used in accordance with the present invention for the sequential purification and fractionation of air.

DETAILED DESCRIPTION OF THE INVENTION

While the invention will be described in connection with the two-column pressure-swing apparatus depicted in Fig. 1, it will be understood that use of the multi-zone column of the present invention is not so limited. On the contrary, the multi-zone column of the present invention may be used alone and in apparatus where the column is removed for regeneration.

Referring now to Fig. 1, a pressure-swing adsorption apparatus which includes a multi-zone column for the combined and sequential purification and fractionation of an air feed is shown generally at 10. Air is delivered to the pressure-swing adsorption apparatus by a compressor 11, having an aftercooler 11a. Compressed air feed enters the apparatus 10 through a 3-way inlet valve 12, which directs the air feed to a first multi-zone column 13. As illustrated, column 13 is in the adsorption cycle, that is, it stands ready to carry out purification and fractionation of the air feed.

The compressed air feed entering adsorber column 13 is first passed into the purification zone 14, which includes a regenerable adsorbent, not shown. In the purification zone 14, contaminants present in the air, especially water vapor, are adsorbed by the adsorbent to provide an effluent of purified air from the purification zone. The purified air effluent from the purification zone continues through the column to the fractionation zone 15 which includes an adsorbent, not shown, for the selective adsorption of at least one of the components of air. For example, for the production of oxygen, the adsorbent in the fractionation adsorber will be selective to nitrogen.

In keeping with the invention and as will be discussed in greater detail hereinafter, the adsorber column 13 is sized so that the heat of adsorption released in the purification zone during adsorption of the contaminants from the feed air is retained in the column 13 and so that on regeneration a volume of purge gas applied to the column 13 is sufficient to desorb the fractionation adsorbent of adsorbate and to desorb the purification adsorber of adsorbate. In addition, the fractionation zone is sized so as to prevent the mass transfer front of the adsorbate, e.g. nitrogen where the column is used to produce oxygen, from breaking through the fractionation zone into the effluent therefrom. The fractionation zone is also sized so as to contain sufficient adsorbent to carry out the desired fractionation unaffected by the heat front generated by the heat of adsorption released in the purification zone 14.

The dry air enriched in oxygen exits column 13 as product gas and is passed to outlet 18 through 3-way outlet valve 19. A portion of product gas is diverted through purge adjustment valve 20 where it is expanded to near ambient pressure. Flow indicators, pressure gauge 21 and purge orifice 22, are provided, and check valve assembly 23 directs the purge to a second multi-zone column 25. As illustrated, column 25 is on the desorption cycle, that is, it stands ready to be regenerated, having been previously used in an adsorption cycle.

Purge gas enters column 25, where it passes first through the fractionation zone 26. As illustrated, the flow of the purge gas is counter-current to the flow during adsorption. It is assumed that the heat of adsorption in the fractionation zone was lost. The volume of purge gas supplied to the column, however, is an amount sufficient to desorb the adsorbent in the fractionation zone of the nitrogen that was adsorbed in a previous cycle and thus regenerates the adsorbent. Product gas laden with nitrogen exits the fractionation adsorbent 26 and enters the purification zone 27 where it regenerates the adsorbent, i.e., desorbs water vapor from the adsorbent under isothermal conditions. The adsorption, desorption cycle is established so that the heat of adsorption in the purification zone is retained therein for use in desorption. Stated another way, the heat of adsorption released during the adsorption cycle in the purification zone is used with the purge to regenerate the adsorbent in the purification zone. Thus, the purification zone operates as a pressure-swing adsorber while the fractionation zone operates as a purge sweep adsorber. Exhaust gas exits column 25 and is directed through a 2-way exhaust valve 29 and flow restrictor valve 30 to exit the apparatus 10 as purge exhaust.

After an appropriate time interval, which may be fixed or variable and can be subject to microprocessor control, as is known, flow of pressurized air to column 13 is stopped and column 13 is exhausted through repressurization valve 31 to equilibrium with column 25. Column 25 is exhausted to regeneration pressure. Three-way inlet valve 12 directs the flow of pressurized air to column 25 where it enters purification zone 27. Two-way exhaust valve 29 is closed. Column 13 receives purge gas through check valve assembly 23, and purge exhaust enters exhaust valve 32 to exit the apparatus 10 through flow restrictor valve 30. In this manner the enrichment and regeneration process is made continuous.

Filter change-out valve 35 and pilot air filter 36 may be provided as shown for removal of adsorbent fines in the product gas stream. This gas can then be used to control the pressure actuated valves of the

EP 0 332 390 B1

system for proper control of cycle time. Proper selection of valves and equipment is well known in the art.

The adsorbents used in the purification zone and in the fractionation zone will, of course, depend on the separations desired in each zone. For the fractionation of air, adsorbents suitable for use in the purification zone must be capable of adsorbing the undesired contaminants from the air feed, especially water vapor, while the adsorbent used in the fractionation zone must be capable of adsorbing the components of air not desired in the enriched effluent from the adsorber column.

Adsorbents suitable for use in the adsorber column of the present invention should have a large internal porous volume, a micropore size sufficiently large to allow entrance of all of the molecules to be adsorbed by that layer of adsorbent, a large percentage of the pores in a small size range, and a high surface activity. The isotherm of the adsorbent should indicate a high capacity throughout the operating range from the inlet conditions to the desired effluent concentration levels. The adsorbent should not promote catalysis or react with the adsorbates. Also, the adsorbent must have a sufficient macropore structure to enable rapid diffusion into the adsorbent granule.

Common types of organic adsorbents include wools and cottons, activated carbons, polymeric carbons, and carbon molecular sieves. Common types of inorganic adsorbents include clays, activated aluminas, silica gels, and molecular sieves. Such adsorbents, as will be appreciated by those skilled in the art, may be suitable, depending upon the particular process parameters required and product characteristics desired for the fractionation of air. In the multi-zone column of the present invention and for the fractionation of air to produce oxygen, the preferred adsorbent for the purification zone is type 13X molecular sieve, while the preferred adsorbent for the fractionation zone is type 5A-MG molecular sieve.

Proper sizing of the adsorbent zones in the multi-zone column of the present invention is particularly important for carrying out the sequential purification and fractionation of air solely within the column without upstream pretreatment of the air feed to remove moisture. Thus the multi-zone column is sized so that the heat of adsorption released during the adsorption of water vapor from the air feed is retained in the column and so that on application of purge gas to the column both the fractionation adsorbent and the purification absorbent are regenerated, i.e., desorbed of adsorbate. In addition, the fractionation zone is sized so as to contain sufficient adsorbent to carry out the desired fractionation unaffected by the heat front generated by the heat of adsorption released in the purification zone and to prevent breakthrough of the mass transfer front during fractionation.

Turning first to the fractionation zone, its length must be sufficient to prevent the mass transfer front of the adsorbed air components from breaking through into the effluent stream during fractionation. The bed length of the fractionation zone required to prevent breakthrough of the mass transfer front may be calculated according to the following relationship:

$$L = \frac{\tau \, \rho_o \, SCFM}{\rho_b \, A_x} \left(\frac{W}{M}\right) + \left(\frac{M}{M_b}\right)(C \, H_d)$$

wherein:

$\tau$     is the adsorption time of the cycle;

$\rho_o$     is the standard density of the exudate component;

SCFM     the flowrate of the exudate:

      SCFM: $5 \times Q_o$ (the flowrate of the exudate)

$\rho_b$     is the bulk density of the adsorbent;

$A_x$     is the cross sectional area of the fractionation zone;

W     is the solute ration, $N_2/O_2$;

M     is the adsorbent equilibrium capacity for the adsorbate;

$M_b$     is the adsorbent equivalent capacity for the adsorbate;

C     is the concentration reduction factor: $C = (\sqrt{N} - \sqrt{NT})^2$;

$H_d$     is the mass transfer unit height $= (H_{ds} + H_{df})/1.2$

where:

$H_{ds}$     is the solid phase unit height $= U_o D_p{}^2/D_f$

and;

$U_o$     is the effective superficial velocity: $2.5 \, (SCFM) \, W \, \rho_o/(M \, \rho_b A_x)$, where $W \, \rho_o$, M, $\rho_b, A_x$ are as defined above;

$D_p$     is the mean particle diameter of the adsorbent;

$D_f$     is the fluid diffusivity;

5

$H_{df}$    is the fluid phase unit height:

$$H_{df} = \frac{(Sc)^{.667}}{a(.61\,\psi)}\left[\frac{10\,D_p(SCFM/A_x)\,\rho_o}{\mu\,(1-\epsilon)\,\psi}\right]^{.41} \quad ,$$

where:

Sc      is the Schmidt number;
a        is the external particle area of the adsorbent;
$\psi$        is the particle shape factor of the adsorbent;
Dp       is the mean particle diameter of the adsorbent;
SCFM     is the exudate flowrate, as above;
$\mu$        is the fluid viscosity; and
$\epsilon$        is the bed bulk void fraction of the fractionation zone.

In the multi-zone column used in accordance with the present invention, the fractionation zone operates as a purge-sweep adsorber. Due to the very high rate of adsorption of either the nitrogen or the oxygen component, the heat released on adsorption of either nitrogen or oxygen is not retained in the fractionation zone, but is lost through the effluent stream. Because little, if any heat of adsorption is retained in the fractionation zone, the purge required to regenerate the fractionation adsorbent is greater than the purge required to regenerate the purification adsorbent. The purge requirement for regeneration of the fractionation zone is thus determinative of the overall purge requirement for the multi-zone column.

However, it will be recognized that the purge applied to the multi-zone column must be sufficient not only to regenerate the adsorbent in the fractionation zone but must also be sufficient to regenerate the adsorbent in the purification zone as well. To insure that there is sufficient volume of purge applied to the column on the regeneration cycle to regenerate both zones the minimum required purge may be calculated according to the following function:

$$Q_p(Req) = Q_f(\tau_a/\tau_p)(P_{V1}/P_{V3})\left(\frac{P_3 - P_{V3}}{P_1 - P_{V1}}\right)(Z_1/Z_3)$$

where:

Qp       is the volume of purge required to regenerate the purification zone;
$Q_f$       is the inlet flowrate;
$\tau_a$        is the adsorption time for the adsorption cycle;
$\tau_p$        is the purge time for the regeneration cycle;
$P_{V1}$       is the vapor pressure at the inlet of the pressure-swing (purification) adsorber;
$P_{V3}$       is the purge exhaust vapor pressure at the outlet of the pressure-swing (purification) adsorber;
$P_3$        is the average purge backpressure;
$P_1$        is the inlet line pressure;
$Z_1$        is the compressibility factor ratio at the inlet pressure; and
$Z_3$        is the compressibility factor ratio at the purge pressure.

The purge ratio, that is, the ratio of the actual volume of purge applied to the column to the volume of purge required to regenerate the purification zone, must be at least 1:1.

A purge ratio of 1:1 is also required in the fractionation zone to achieve successful regeneration. However, it will be appreciated that the purge requirement for the fractionation zone is higher than that of the purification zone because of the lower purge temperatures in the fractionation zone. The lower purge temperature is a result of the desorption process and the fact that the heat of adsorption is not retained in the fractionation zone. As a result, purge vapor pressure $P_{V3}$ at the purge outlet from this section is lowered. In a purge sweep process the purge outlet vapor pressure is about two-thirds the outlet vapor pressure typically achieved in a pressure swing absorption system operating on the Skarstrom cycle. Thus, the purge required in the fractionation zone is about one and one-half times the purge required in the purification zone.

The purification zone operates as a heaterless pressure-swing adsorber. That is, the purification zone is advantageously sized so that the heat of adsorption, primarily due to adsorption of water, is preferably completely retained in the purification zone. To that end, then, the length of the purification zone will be dependent on the nature of the gas passed through the zone as well as the nature of adsorbent used. In the sequential purification and fractionation of air in a single, multi-zone column, the bed length required to retain the heat of adsorption in the purification zone is calculated using the following formula:

$$ L = U_o \times (\rho \times C_p) \left[ \frac{c}{h\,a} + \frac{\tau}{C_{pd}\rho_b} + 2\sqrt{\frac{c\,\tau}{h\,a\,C_{pd}\rho_b}} \right] $$

wherein:

$U_o$     is the superficial air velocity;
$\rho$     is the density of air at operating conditions;
$C_p$     is the specific heat of air;
$c$     is the temperature reduction factor: $c = (\sqrt{N} - \sqrt{NT})^2$;
$h$     is the heat transfer coefficient;
$a$     is the external surface area of the adsorbent;
$\tau$     is the adsorption time for the adsorption cycle;
$C_{pd}$     is the heat capacity of the adsorbent; and
$\rho_b$     is the bulk density of the adsorbent.

While the multi-zone column will not be rendered inoperative if the heat released upon the adsorption of water is not retained completely in the purification zone, but instead traverses into the fractionation zone, that manner of operation has a disadvantage relative to the preferred technique. Specifically, if the heat of adsorption is allowed to pass into the fractionation adsorbent the resulting temperature increase in the fractionation zone reduces the capacity of the adsorbent therein to adsorb and retain adsorbate, whether it be nitrogen or oxygen. If the fractionation zone itself is long enough, however, then the adsorbate mass transfer zone can be located in the fractionation zone beyond the heat front from the heat of adsorption from the purification zone, a location in the fractionation zone where it is cooler and the capacity of the adsorbent is not adversely affected. It will be appreciated however, that upon regeneration the heat of adsorption that traverses into the fractionation zone must be carried by countercurrent purge gas to the purification zone to effect complete and efficient regeneration of the adsorbent in the purification zone.

Since the fractionator adsorbent capacity for nitrogen or oxygen may be adversely affected by heat, as discussed above, the purification zone is preferably sized to retain all of the heat of adsorption released during purification of the air feed so that the heat front generated in the purification zone does not traverse the purification zone into the fractionation zone. To minimize the adverse effect of loss of fractionation adsorbent capacity due to heat traversal, if any, from the purification zone into the fractionation zone which may occur, especially when the feed air is excessively high in moisture content, the fractionation zone may also be oversized somewhat. By doing so, the desired fractionation is carried out in the fractionation zone above the heat front and is thus unaffected by the heat front generated by the heat of adsorption released in the purification zone.

The following Example illustrates the improved energy efficiency using the multi-zone column according to the present invention to produce oxygen from air in comparison to using separate pressure-swing adsorbers for first removing the water vapour from the air feed and subsequently fractionating the air feed into oxygen.

The data are as follows:

A.   Production of oxygen using a separate PSA dryer and oxygen generator

|  | PSA dryer | $O_2$ Generator |
|---|---|---|
| Chamber inside dia. | 0.0823 m (0.8854 ft.) | 0.0823 m (0.8854 ft) |
| Adsorbent bed length | 1220 mm (4.0 ft.) | 1220 mm (4.0 ft.) |
| Adsorbent 13x Mol Sieve | 13 x Mol Sieve | 5A-MG Mol Sieve |
| Adsorbent Particle Size | 3.175 mm (1/8 in.) bead | 16 x 40 mesh gran. |
| Inlet flow rate | 3.1145 $sm^3$ min (110 scfm) | 2.265 $sm^3$ min (80 scfm) |
| Inlet pressure | 7.226 bar (104.7 psia) | 3.223 bar (46.7 psia) |
| Inlet temperature | 26.67°C to 37.78°C (80°F to 100°F) | 26.67°C to 37.78°C (80°F to 100°F) |
| Adsorption time/cycle | 1.133 min | 0.40 min |
| Purge time/cycle | 1.050 min | 0.33 min |
| Outlet flowrate | 2.265 $sm^3$ min (80 scfm) | 0.1062 $sm^3$ min (3.75 scfm)$O_2$ |
| Effluent quality | -37.78°C dew point | 95% $O_2$ |

B.   Production of oxygen using the multi-zone column of the present invention.

| | |
|---|---|
| Chamber inside dia. | 0.0823 m (0.8854 ft.) |
| Purification zone length | 152 mm (0.50 ft.) |
| Fractionation zone length | 1220 mm (4.0 ft.) |
| Purification zone adsorbent | (1/8 in.) beaded 13x Mol. Sieve |
| Fractionation zone adsorbent | 16 x 40 mesh 5A-MG Mol. Sieve |
| Inlet flowrate | 2.265 $sm^3$ min (80 scfm) |
| Inlet pressure | 3.223 bar (46.7 psia) |
| Adsorption time/cycle | 0.40 min. |
| Purge time/cycle | 0.33 min. |
| Outlet flowrate | 0.1062 $sm^3$ min. (3.75 scfm)$O_2$ |
| Effluent quality | 95% $O_2$ |

A comparison of the energy requirements for the separate purification/fractionation system and the single multi-zone column purification/fractionation system of the present invention is set forth below. The fluid horsepower requirements to carry out the purification and fractionation were calculated using the following formula:

$$\text{Fluid Horsepower} = 4.364 \times 10^{-3} P_a Q \left(\frac{N \cdot n}{n-1}\right) \left[ \left(\frac{P_d}{P_a}\right)^{\frac{n-1}{N \cdot n}} - 1 \right]$$

where:

$P_a$     is the compressor inlet pressure;

N     is the number of compressor stages;

$\eta$     is the polytropic process constant;

$P_d$     is the discharge pressure; and

Q     is the flowrate

The energy requirement (in kilowatts) to carry out the purification and fractionation was calculated on the basis of the fluid horsepower according to the following formula:

kW (Input) = fluid horsepower x 0.7457/Eff.

where Eff. is the overall efficiency

The values for each of $P_a$, N, $\eta$, Q, $P_d$ and Eff. and the fluid horsepower and kilowatt hour input requirement for the separate system and the multi-zone column are set forth in Table I below:

TABLE I

| | | |
|---|---|---|
| $P_a$ | 1.0145 bar (14.7 psia) | 1.0145 bar (14.7 psia) |
| N | 1 | 1 |
| h | 1.3 | 1.3 |
| Q | 3.1145 sm$^3$ min.(110scfm) | 2.265 sm$^3$ min.(80scfm) |
| $P_d$ | 7.226 bar (104.7 psia) | 3.223 bar (46.7 psia) |
| Eff | 0.62 | 0.62 |
| Fluid | 3.07 kW (17.53 HP) | 5.07 kW (6.80 HP) |
| kW | 21.03 | 8.18 |

The example demonstrate the advantages of the multi-zone column used according to the present invention for the sequential purification and fractionation of air to produce oxygen over the separate purification and subsequent fractionation of air to produce oxygen. The data demonstrate that the overall size of the multi-zone column of the present invention is only slightly greater than one-half that of the separate system, namely 1370 mm (4.5 feet) in length overall to 2438 mm (8.0 feet) in length overall. Moreover, the energy requirement for the multi-zone column is substantially less: only 8.18 kW required as opposed to 21.08kW required for the separate system. The example further demonstrates that the multi-zone column can be used efficiently and effectively for the sequential purification and fractionation of air in the absence of separate upstream pretreatment of the air to lower its moisture content.

## Claims

1. A process for the sequential purification and fractionation of air in a single column (13) and in the absence of pretreating the air feed to remove a contaminant comprising passing an air feed through an adsorber column (13) to produce product effluent, said column (13) having at least two adsorption zones (14,15), said column (13) having a first zone (14) comprising an air feed purification adsorber for purifying said feed and having a first adsorbent therein for adsorbing said contaminant from said feed to effect purification, said first adsorbent being capable of being regenerated, and a second zone (15) comprising an air fractionation adsorber for adsorbing at least one component of air and having a second adsorbent therein to effect fractionation of air, said second adsorbent being capable of being regenerated, characterized by said first zone (14) being sized in accordance with the adsorption time, the flow rate, temperature and pressure of said feed such that the heat of adsorption released during the adsorption of said contaminant from the air feed is retained in said column so that said first zone operates as a pressure swing adsorber, said second zone (15) being sized in accordance with the

9

adsorption time, the flow rate, temperature and pressure of said feed so as to carry out the fractionation unaffected by the heat front generated by the heat of adsorption released in the first zone (14) and to prevent breakthrough of the mass transfer front during fractionation so that said second zone operates as a purge sweep adsorber, and removing the product effluent from said column (13).

2. The process of claim 1 wherein said first zone (14) is sized so as to retain the heat of adsorption released during the adsorption of said contaminant from the feed air.

3. The process of claim 1 wherein said column is one of at least two such columns (13,25), the process comprising alternately repeating an adsorption cycle and a desorption cycle in each of said at least two adsorber columns (13,25), said desorption cycle comprising reducing the pressure of said adsorber column (13 or 25) which has most recently undergone the adsorption cycle, applying a purge to said column to regenerate the adsorbent in both said fractionation zone (115) and said purification zone (14), and removing the regeneration gas from said column (13 or 25).

4. The process of claim 3 wherein said first zone (14) is sized so as to retain the heat of adsorption released during the adsorption of said contaminant from the feed air.

5. The process of any one of claims 1 to 4 wherein said contaminant is water vapour.

**Patentansprüche**

1. Verfahren zur aufeinanderfolgenden Reinigung und Fraktionierung von Luft in einer einzelnen Kolonne (13) ohne Vorbehandlung der eingespeisten Luft, um eine Verunreinigung zu entfernen, bei dem die eingespeiste Luft durch eine Adsorberkolonne (13) geführt wird, um ein ausströmendes Produkt zu erhalten, wobei die Kolonne (13) mindestens zwei Adsorptionszonen (14, 15) besitzt und die Kolonne (13) eine erste Zone (14) aufweist, die einen Reinigungsadsorber für die eingespeiste Luft zur Reinigung der eingespeisten Luft umfaßt und die darin ein erstes Adsorbens für die Adsorption der Verunreinigung der eingespeisten Luft enthält, um deren Reinigung zu erzielen, wobei das erste Adsorbens regenerierbar ist, und eine zweite Zone (15) aufweist, die einen Adsorber für die Fraktionierung der Luft zur Adsorption mindestens einer Komponente der Luft umfaßt und die darin ein zweites Adsorbens aufweist um eine Fraktionierung der Luft zu bewirken, wobei das zweite Adsorbens regenerierbar ist,
   **dadurch gekennzeichnet,**
   daß die erste Zone (14) in Übereinstimmung mit der Adsorbtionszeit der Strömungsrate, der Temperatur und dem Druck der eingespeisten Luft so ausgelegt ist, daß die Adsorbtionswärme, die während der Adsorbtion der Verunreinigung aus der eingespeisten Luft freigesetzt wird, in der Kolonne zurückgehalten wird, so daß die erste Zone als ein Druckwechsel-Adsorber arbeitet, und die zweite Zone (15) in Übereinstimmung mit der Adsorbtionszeit, der Strömungsrate, der Temperatur und dem Druck der eingespeisten Luft so ausgelegt ist, daß die Fraktionierung unbeeinflußt durch die Wärmefront, die durch die Adsorbtionswärme erzeugt wird, die in der ersten Zone (14) freigesetzt wird, ausgeführt wird, und daß ein Durchbruch der Front des Massentransfers während der Fraktionierung vermieden wird, so daß die zweite Zone als ein Reinigungsadsorber arbeitet, und das ausströmende Produkt aus der Kolonne (13) entfernt wird.

2. Verfahren nach Anspruch 1, bei dem die erste Zone (14) so ausgelegt ist, daß sie die Adsorbtionswärme zurtickhält, die während der Adsorbtion der Verunreinigung aus der eingespeisten Luft freigesetzt wird.

3. Verfahren nach Anspruch 1, bei dem die Kolonne eine von mindestens zwei derartigen Kolonnen (13, 25) ist, wobei das Verfahren wechselweise wiederholend einen Adsorbtionszyklus und einen Desorbtionszyklus in jeder der mindestens zwei Adsorbtionskolonnen (13, 25) umfaßt, wobei der Desorbtionszyklus eine Druckverminderung der Adsorberkolonne (13 oder 25), in der zuletzt der Adsorbtionszyklus stattgefunden hat, eine Reinigung dieser Kolonne um das Adsorbens sowohl in der Fraktionierungszone (115) als auch in der Reinigungszone (14) zu regenerieren, und eine Entfernung des Regenerationsgases aus der Kolonne (13 oder 25) umfaßt.

**4.** Verfahren nach Anspruch 3, bei dem die erste Zone (14) so ausgelegt ist, daß sie die Adsorbtionswärme zurückhält, die während der Adsorbtion der Verunreinigung aus der eingespeisten Luft frei wird.

**5.** Verfahren nach irgendeinem der Ansprüche 1 bis 4, bei dem die Verunreinigung Wasserdampf ist.

## Revendications

**1.** Procédé pour la purification et le fractionnement séquentiels d'air dans une seule colonne (13) et en l'absence de pré-traitement de l'alimentation d'air pour éliminer un contaminant consistant à faire passer une alimentation d'air à travers une colonne d'adsorbeur (13) pour produire un effluent de produit, ladite colonne (13) présentant au moins deux zones d'adsorption (14, 15), ladite colonne (13) présentant une première zone (14) comprenant un adsorbeur de purification d'alimentation d'air pour purifier ladite alimentation et ayant un premier adsorbant à l'intérieur de celui-ci pour adsorber ledit contaminant de ladite alimentation pour effectuer une purification, ledit premier adsorbant pouvant être régénéré, et une seconde zone (15) comprenant un adsorbeur de fractionnement d'air pour adsorber au moins un constituant de l'air et ayant un second adsorbant à l'intérieur de celui-ci pour effectuer un fractionnement de l'air, ledit second adsorbant pouvant être régénéré, caractérisé en ce que ladite première zone (14) est dimensionnée selon la durée d'adsorption, le débit, la température et la pression de ladite alimentation de sorte que la chaleur d'adsorption libérée pendant l'adsorption dudit contaminant de l'alimentation d'air est retenue dans ladite colonne de sorte que ladite première zone fonctionne comme un adsorbeur modulé en pression, en ce que ladite seconde zone (15) est dimensionnée selon la durée d'adsorption, le débit, la température et la pression de ladite alimentation afin de réaliser le fractionnement non affecté par le front de chaleur produit par la chaleur d'adsorption libérée dans la première zone (14) et pour éviter une percée du front de transfert de matière pendant le fractionnement de sorte que ladite seconde zone fonctionne comme un adsorbeur de balayage de purge, et en ce qu'on élimine l'effluent de produit de ladite colonne (13).

**2.** Procédé selon la revendication 1, dans lequel ladite première zone (14) est dimensionnée afin de retenir la chaleur d'adsorption libérée pendant l'adsorption dudit contaminant de l'air d'alimentation.

**3.** Procédé selon la revendication 1, dans lequel ladite colonne est une d'au moins deux telles colonnes (13, 25), le procédé consistant à répéter alternativement un cycle d'adsorption et un cycle de désorption dans chacune desdites au moins deux colonnes d'adsorbeurs (13, 25), ledit cycle de désorption comprenant la réduction de la pression de ladite colonne d'adsorbeur (13 ou 25) qui a été soumise le plus récemment au cycle d'adsorption, l'application d'une purge à ladite colonne pour régénérer l'adsorbant à la fois dans ladite zone de fractionnement (15) et ladite zone de purification (14), et l'élimination du gaz de régénération de ladite colonne (13 ou 25).

**4.** Procédé selon la revendication 3, dans lequel ladite première zone (14) est dimensionnée afin de retenir la chaleur d'adsorption libérée pendant l'adsorption dudit contaminant de l'air d'alimentation.

**5.** Procédé selon l'une quelconque des revendications 1 à 4, dans lequel ledit contaminant est de la vapeur d'eau.

FIG. 1